(19) **Europäisches Patentamt / European Patent Office / Office européen des brevets**

(11) **EP 3 493 451 B1**

(12) **EUROPEAN PATENT SPECIFICATION**

(45) Date of publication and mention of the grant of the patent:
**02.10.2024 Bulletin 2024/40**

(21) Application number: **16915997.7**

(22) Date of filing: **14.09.2016**

(51) International Patent Classification (IPC):
**H04L 5/00** (2006.01)

(52) Cooperative Patent Classification (CPC):
**H04L 5/00; H04L 5/0048;** H04L 5/0053

(86) International application number:
**PCT/CN2016/099068**

(87) International publication number:
**WO 2018/049612 (22.03.2018 Gazette 2018/12)**

(54) **MEASUREMENT SIGNAL TRANSMISSION METHOD AND NETWORK DEVICE**

MESSSIGNALÜBERTRAGUNGSVERFAHREN UND NETZWERKVORRICHTUNG

PROCÉDÉ DE TRANSMISSION DE SIGNAL DE MESURE ET DISPOSITIF DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.06.2019 Bulletin 2019/23**

(73) Proprietor: **Huawei Technologies Co., Ltd.**
**Longgang District**
**Shenzhen, Guangdong 518129 (CN)**

(72) Inventors:
• **KUANG, Yiru**
**Shenzhen**
**Guangdong 518129 (CN)**
• **WANG, Jian**
**Shenzhen**
**Guangdong 518129 (CN)**
• **ZENG, Yongbo**
**Shenzhen**
**Guangdong 518129 (CN)**
• **XU, Haibo**
**Shenzhen**
**Guangdong 518129 (CN)**

(74) Representative: **Gill Jennings & Every LLP**
**The Broadgate Tower**
**20 Primrose Street**
**London EC2A 2ES (GB)**

(56) References cited:
**WO-A1-2014/161586     WO-A1-2014/161586**
**WO-A1-2015/034411     CN-A- 104 025 682**
**CN-A- 105 659 659     US-A1- 2015 092 655**

• **LG ELECTRONICS: "Discussion on NB-MIB contents for NB-IoT", vol. RAN WG1, no. Sophia Antipolis, FRANCE; 20160322 - 20160324, 16 March 2016 (2016-03-16), XP051081077, Retrieved from the Internet <URL:http://www.3gpp.org/ftp/tsg_ran/WG1_RL 1/TSGR1_AH/LTE_NB-IoT_1603/Docs/> [retrieved on 20160316]**
• **SAMSUNG: "Remaining Details of NB-MIB Design", vol. RAN WG1, no. Sophia Antipolis, FRANCE; 20160322 - 20160324, 16 March 2016 (2016-03-16), XP051081042, Retrieved from the Internet <URL:http://www.3gpp.org/ftp/tsg_ran/WG1_RL 1/TSGR1_AH/LTE_NB-IoT_1603/Docs/> [retrieved on 20160316]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to the field of communications technologies, and in particular, to a measurement signal transmission method and a network device.

### BACKGROUND

A reference signal (Reference Signal, RS) is a known signal that is provided by a transmit end for a receive end and that is used for channel estimation or channel sounding. A downlink reference signal is a signal that is provided by a base station for user equipment (User Equipment, UE) and that is used for downlink channel estimation or measurement. The downlink reference signal includes a cell-specific reference signal (Cell-specific Reference Signal, CRS). The cell-specific reference signal may be used to demodulate a downlink control channel, and may be further used to perform downlink channel measurement. A downlink channel measurement result is a key indicator for cell selection/reselection and cell handover. Currently, downlink channel measurement is performed mainly by using a CRS. A CRS is distributed on any physical resource block (Physical Resource Block, PRB) on a system frequency band. To be specific, the CRS is a reference signal distributed on an entire frequency band.

A subsystem (for example, a narrowband-Internet of Things (Narrow Band-Internet of Thing, NB-IoT)) is a technology applied to a future fifth generation mobile communications technology (5G) or a new radio access network technology (New Radio Access Technology, NR). The subsystem needs to be deployed on a 100 kHz channel raster. If a center frequency of a PRB or the sum of the center frequency and a particular frequency offset is an integer multiple of 100 kHz, it is considered that the PRB can be used to deploy the subsystem.

CRSs are consecutively distributed on an entire frequency band, that is, the CRS is distributed on each PRB. However, some PRBs are used to deploy the subsystem, and reference signals are undesired on the PRBs used to deploy the subsystem. As a result, deployment of the subsystem and deployment of a reference signal similar to the CRS distributed on the entire frequency band affect each other.

WO2014161586A1 relates to TRANSMISSION OF REFERENCE SYMBOLS. LG ELECTRONICS, "Discussion on NB-MIB contents for NB-IoT", vol. RAN WG1, no. Sophia Antipolis, FRANCE; 20160322 - 20160324, (20160316), 3GPP DRAFT; R1-161965 DISCUSSION ON NB-MIB CONTENTS FOR NB-IOT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; http://www.3gpp.org/ftp/tsg_ran/WG1_RL1/TSGR1_AH/LTE_NB-IoT_1603/Docs and SAMSUNG, "Remaining Details of NB-MIB Design", vol. RAN WG1, no. Sophia Antipolis, FRANCE; 20160322 - 20160324, (20160316), 3GPP DRAFT; R1-161925 NB-MIB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG1_RL1/TSGR1_AH/LTE_NB-IoT_1603/Docs relate to narrowband LTE.

### SUMMARY

Implementations of the present disclosure provide a measurement signal transmission method and a network device, to reduce impact between measurement signal deployment and subsystem deployment, and ensure measurement performance of a measurement signal.

The invention has been defined in the independent claims. Further specific technical features have been defined in the dependent claims.

In the implementations of the present disclosure, the physical resource block used to deploy the measurement signal is determined, and the physical resource block is the subset of all the physical resource blocks in frequency domain corresponding to the channel bandwidth of the user equipment; the physical resource corresponding to the physical resource block is determined; and the measurement signal is transmitted to the user equipment by using the physical resource, and the measurement signal is used by the user equipment to measure the channel information. This avoids that measurement signal deployment and subsystem deployment occupy a same physical resource block, or reduces a probability that measurement signal deployment and subsystem deployment occupy a same physical resource block, thereby reducing impact between measurement signal deployment and subsystem deployment, and ensuring measurement performance of the measurement signal.

### BRIEF DESCRIPTION OF DRAWINGS

FIG 1 is a schematic diagram of a possible network architecture according to an implementation of the present disclosure;

FIG 2 is a table of mapping between a channel bandwidth and a quantity of physical resource blocks;

FIG 3 is a schematic flowchart of a measurement signal transmission method according to an implementation of the present disclosure;

FIG 4 is a table of comparison between physical resource blocks used to deploy a subsystem;

FIG 5a is a table of comparison between physical resource blocks used to deploy a measurement signal;

FIG 5b is another table of comparison between physical resource blocks used to deploy a measurement signal;

FIG 5c is still another table of comparison between physical resource blocks used to deploy a measurement signal;

FIG 6a is a schematic diagram of consecutive deployment of a measurement signal;

FIG 6b is a schematic diagram of evenly-spaced deployment of a measurement signal; and

FIG 7 is a schematic structural diagram of a network device according to an implementation of the present disclosure.

## DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

Terminologies such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

It should be understood that the technical solutions in the implementations of the present disclosure may be applied to a Long Term Evolution (Long Term Evolution, LTE) architecture; or may be applied to a Universal Mobile Telecommunications System (Universal Mobile Telecommunications System, UMTS) Terrestrial Radio Access Network (UMTS Terrestrial Radio Access Network, UTRAN) architecture, or a Global System for Mobile Communications (Global System for Mobile Communication, GSM)/Enhanced Data Rates for GSM Evolution (Enhanced Data Rate for GSM Evolution, EDGE) radio access network (GSM EDGE Radio Access Network, GERAN) architecture. In the UTRAN architecture or the GERAN architecture, a function of an MME is implemented by a serving general packet radio service (General Packet Radio Service, GPRS) support node (Serving GPRS Support, SGSN), and a function of an SGW\PGW is implemented by a gateway GPRS support node (Gateway GPRS Support Node, GGSN). The technical solutions in the implementations of the present disclosure may be further applied to another communications system, for example, a public land mobile network (Public Land Mobile Network, PLMN) system, or even a future 5G communications system or an NR system. This is not limited in the implementations of the present disclosure. Preferably, the implementations of the present disclosure are applied to a future 5G communications system architecture or an NR system architecture.

The implementations of the present disclosure may be applied to UE. The user equipment may communicate with one or more core networks by using a radio access network (Radio Access Network, RAN). The user equipment may include but is not limited to an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a mobile transportation device, a wearable device, or a terminal device in a future 5G communications system.

The implementations of the present disclosure may also be applied to a network device. The network device may be a device used to communicate with user equipment. For example, the network device may be a base transceiver station (Base Transceiver Station, BTS) in a GSM or CDMA system, or a NodeB (NodeB, NB) in a WCDMA system; or may be an evolved NodeB (Evolutional Node B, eNB or eNodeB) in an LTE system, or a network side device in a future 5G communications system, a network device in an NR system.

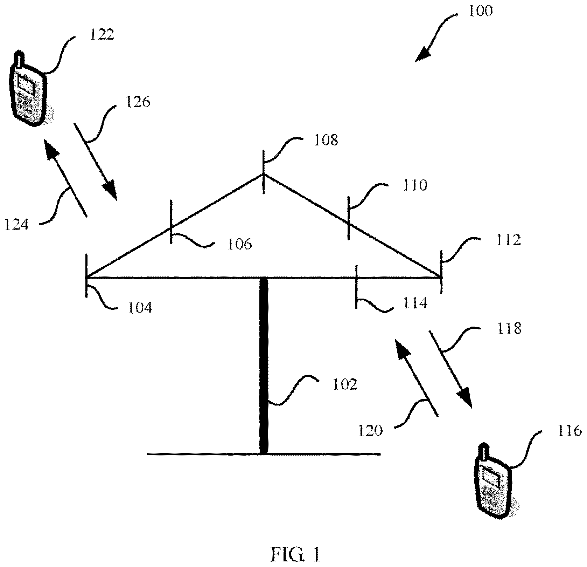

In addition, aspects or features of the present disclosure may be implemented as a method, an apparatus or a product that uses standard programming and/or engineering technologies. The term "product" used in this application covers a computer program that can be accessed from any computer readable component, carrier, or medium. For example, the computer-readable medium may include but is not limited to: a magnetic storage component (for example, a hard disk, a floppy disk, or a magnetic tape), an optical disc (for example, a compact disc (Compact Disk, CD), a digital versatile disc (Digital Versatile Disk, DVD), a smart card and a flash memory component (for example, an erasable programmable read-only memory (Erasable Programmable Read-Only Memory, EPROM), a card, a stick, or a key drive). In addition, various storage media described in this specification may represent one or more devices and/or other machine-readable media used to store information. The term "machine-readable medium" may include but is not limited to a radio channel, and various other media that can store, contain, and/or carry an instruction and/or data. FIG 1 is a schematic diagram of a possible network architecture according to an implementation of the present disclosure. As shown in FIG 1, the network architecture 100 includes a network device 102, and the network device 102 may include a plurality of antennas, for example, antennas 104, 106, 108, 110, 112, and 114. In addition, the network device 102 may additionally include a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving.

The network device 102 may communicate with a plurality of user equipments (for example, user equipment 116 and user equipment 122). However, it may be understood that the network device 102 may communicate with any quantity of user equipments similar to the user equipment 116 or the user equipment 122. For example, the user equipment 116 and the user equipment 122 each may be a cellular phone, a smartphone, a portable computer, a handheld communications device, a handheld computing device, a satellite radio apparatus, a global positioning system, a PDA, an in-vehicle device, and/or any other suitable device configured to perform communication in the wireless communications system 100.

As shown in FIG 1, the user equipment 116 communicates with the antennas 112 and 114. The antennas 112 and 114 send information to the terminal device 116 by using a forward link 118, and receive information from the user equipment 116 by using a reverse link 120. In addition, the user equipment 122 communicates with the antennas 104 and 106. The antennas 104 and 106 send information to the user equipment 122 by using a forward link 124, and receive information from the user equipment 122 by using a reverse link 126.

It should be understood that the implementations of the present disclosure may be applied to downlink transmission, for example, 118 and 124 shown in FIG 1. That is, the network device 122 transmits a measurement signal to the user equipment. FIG 1 is a simplified schematic diagram of an example. The network may further include another network device that is not shown in FIG 1.

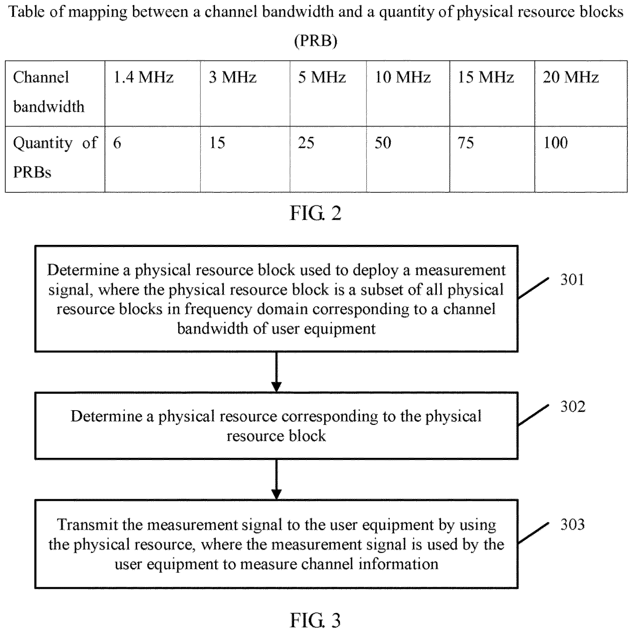

The network device 122 shown in FIG 1 may further configure, for the user equipment 116 or 122 or another user equipment, a channel bandwidth and a system resource corresponding to the channel bandwidth. The channel bandwidth means limiting a lower limit frequency and an upper limit frequency at which a signal is allowed to pass the channel, that is, limiting a frequency passband. When there is a subsystem in a future 5G communications system or an NR system, the channel bandwidth may be a primary system bandwidth. The network device 122 may further configure a subcarrier spacing for the user equipment 116 or 122, and determine, based on the channel bandwidth and the subcarrier spacing, the system resource corresponding to the channel bandwidth, and further configure the system resource corresponding to the channel bandwidth. The system resource corresponding to the channel bandwidth may be all physical resource blocks in frequency domain corresponding to the channel bandwidth, that is, a total quantity of physical resource blocks in frequency domain. It should be noted that all physical resource blocks in the implementations of the present disclosure are physical resource blocks in frequency domain. Referring to FIG 2, FIG 2 is a table of mapping between a channel bandwidth and a quantity of physical resource blocks (PRB). It should be noted that the mapping table shown in FIG 2 is a mapping table corresponding to a case in which the subcarrier spacing is 15 kHz. If the subcarrier spacing is not 15 kHz, a correspondence between a channel bandwidth and a quantity of PRBs is different from that in FIG 2. In a cellular communications system or an LTE system, each PRB includes 12 subcarriers.

Currently, a CRS used for downlink channel measurement is distributed on any PRB on a system frequency band. For example, a channel bandwidth is 3 MHz, a subcarrier spacing is 15 kHz, and a CRS is distributed on each of 15 PRBs corresponding to the channel bandwidth.

In the future 5G communications system or the NR system, there are some new designs and requirements. Each NR subcarrier may support a plurality of basic parameters (numerology) designed in an orthogonal frequency division multiplexing system. The numerology may include a subcarrier spacing, a cyclic prefix length, a transmission time interval length, a channel bandwidth, and the like. A downlink subcarrier spacing in the future 5G communications system or the NR system is 15 kHz, or $2^n$ times as large as 15 kHz, for example, 120 kHz or 150 kHz. For various numerologies, subsystem deployment may be supported. A subsystem may include but is not limited to a narrowband-Internet of Things. The subsystem needs to be deployed on a 100 kHz channel raster. If a center frequency of a PRB or the sum of the center frequency and a particular frequency offset is an integer multiple of 100 kHz, it is considered that the PRB can be used to deploy the subsystem.

The CRS is distributed on each PRB. However, some PRBs are used to deploy the subsystem, and reference signals are undesired on the PRBs used to deploy the subsystem. As a result, deployment of the subsystem and deployment of a reference signal similar to the CRS distributed on an entire frequency band affect each other.

To avoid or reduce the impact between deployment of the subsystem and deployment of the reference signal similar to the CRS distributed on the entire frequency band, the implementations of the present disclosure provide a measurement signal and a measurement signal transmission method, to avoid or reduce impact of measurement signal deployment on subsystem deployment, and ensure measurement performance of the measurement signal. The measurement signal is used by user equipment to measure channel information, that is, implement a measurement function of a CRS. In addition, the measurement signal has forward compatibility. In other words, the measurement signal is compatible with a farther communications system such as the future 5G communications system, the NR system, or a future sixth generation mobile communications technology (6G). However, the measurement signal is not a reference signal distributed on an entire frequency band. It should be noted that a name of the measurement signal constitutes no limitation to the implementations of the present disclosure. The implementations of the present disclosure further provide a network device, configured to implement the measurement signal transmission method.

With reference to FIG 3 to FIG 5, the measurement signal transmission method provided in the implementations of the present disclosure is described below in detail. Referring to FIG 3, FIG 3 is a schematic flowchart of a measurement signal transmission method according to an implementation of the present disclosure. The method may include the following steps.

301. Determine a physical resource block used to deploy a measurement signal, where the physical resource block is a subset of all physical resource blocks in frequency domain corresponding to a channel bandwidth of user equipment.

Specifically, any network device may configure a channel bandwidth for each user equipment in coverage of the network device. When there is a subsystem, the channel bandwidth may be a primary system bandwidth.

The network device configures, for the user equipment, the channel bandwidth and a system resource corresponding to the channel bandwidth. The system resource corresponding to the channel bandwidth is all physical resource blocks in frequency domain corresponding to the channel bandwidth. In a possible implementation, the network device further configures a subcarrier spacing for the user equipment; determines, based on the channel bandwidth and the subcarrier spacing, the system resource corresponding to the channel bandwidth; and further configures, for the user equipment, the system resource corresponding to the channel bandwidth. If the subcarrier spacing is 15 kHz, the network device may configure, for the user equipment based on the mapping table that is shown in FIG 2 and that is between a channel bandwidth and a quantity of PRBs, a quantity of PRBs corresponding to the channel bandwidth.

When or after configuring the channel bandwidth and the system resource corresponding to the user equipment, the network device configures, in the system resource corresponding to the user equipment, a physical resource block used to deploy a subsystem or a physical resource block used to deploy other signals than the measurement signal and the subsystem. Subsystem deployment is used as an example below for description.

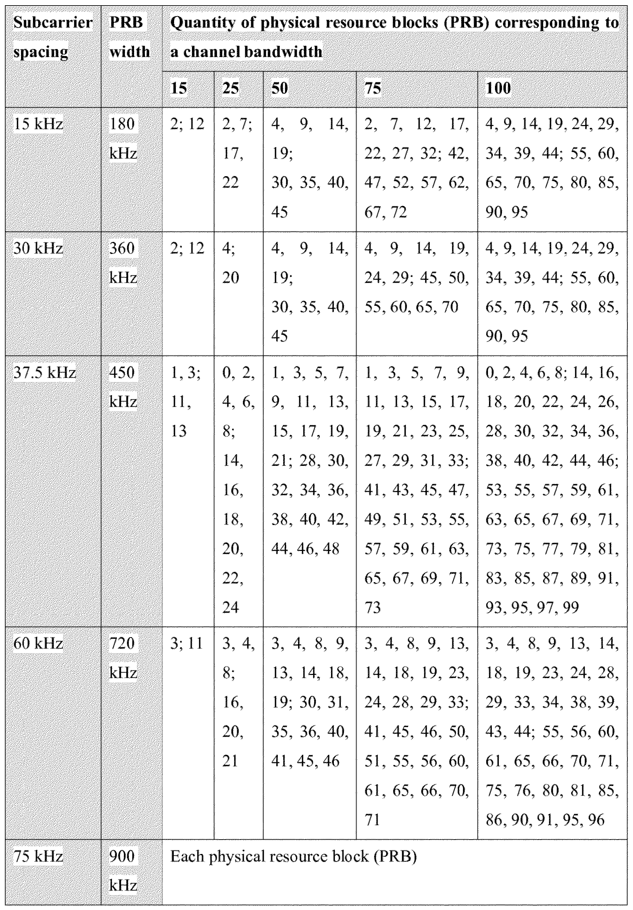

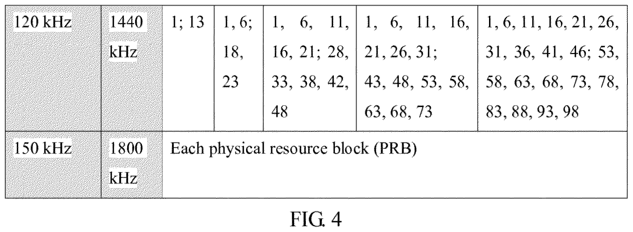

Because the subsystem needs to be deployed on a 100 kHz channel raster, only some PRBs meeting the condition can be used to deploy the subsystem. A center frequency of each PRB is calculated. If a center frequency of a PRB or the sum of the center frequency of the PRB and a particular frequency offset is an integer multiple of 100 kHz, it is considered that the PRB can be used to deploy the subsystem. A future 5G communications system or an NR system may support a plurality of numerologies, that is, support a plurality of subcarrier spacings. Therefore, a table that is shown in FIG 4 and that is of comparison between physical resource blocks used to deploy the subsystem is obtained, through calculation, for the plurality of subcarrier spacings and quantities of PRBs corresponding to a plurality of channel bandwidths. The comparison table shown in FIG 4 describes a number of (the number starts from 0) of an occupied PRB in a case of each quantity of PRBs and each of the plurality of subcarrier spacings. That the subcarrier spacing is 15 kHz and the quantity of PRBs corresponding to the channel bandwidth is 15 is used as an example. Because one PRB includes 12 subcarriers, a PRB width is 180 kHz. In this case, PRBs that may be used to deploy the subsystem are represented as (2; 12). To be specific, PRBs numbered 2 and 12 in the 15 PRBs may be used to deploy the subsystem. It should be noted that the subsystem may be deployed on each of the PRBs numbered 2 and 12, or may be deployed on either of the PRBs numbered 2 and 12, or may be deployed on neither of the PRBs numbered 2 and 12. That the subcarrier spacing is 37.5 kHz and the quantity of PRBs corresponding to the channel bandwidth is 15 is used as an example. In this case, a PRB width is 450 kHz, and PRBs that may be used to deploy the subsystem are (1; 3; 11; 13). To be specific, PRBs numbered 1, 3, 11, and 13 in the 15 PRBs may be used to deploy the subsystem. It should be noted that the subsystem may be deployed on one or more of the four PRBs or on each of the four PRBs, or may be deployed on none of the four PRBs.

With reference to the channel bandwidth and the subcarrier spacing, the network device may configure, in the system resource corresponding to the user equipment and based on the comparison table shown in FIG 4, the physical resource block used to deploy the subsystem. Zero physical resource block or one or more physical resource blocks may be used to deploy the subsystem.

The network device determines the physical resource block used to deploy the measurement signal, and the physical resource block is the subset of all the physical resource blocks in frequency domain corresponding to the channel bandwidth. Optionally, the network device determines, based on the physical resource block occupied for deploying the subsystem, a physical resource used to deploy the measurement signal, to avoid that measurement signal deployment and subsystem deployment occupy a same physical resource block, or reduce a probability that measurement signal deployment and subsystem deployment occupy a same physical resource block, thereby avoiding or reducing impact between measurement signal deployment and subsystem deployment.

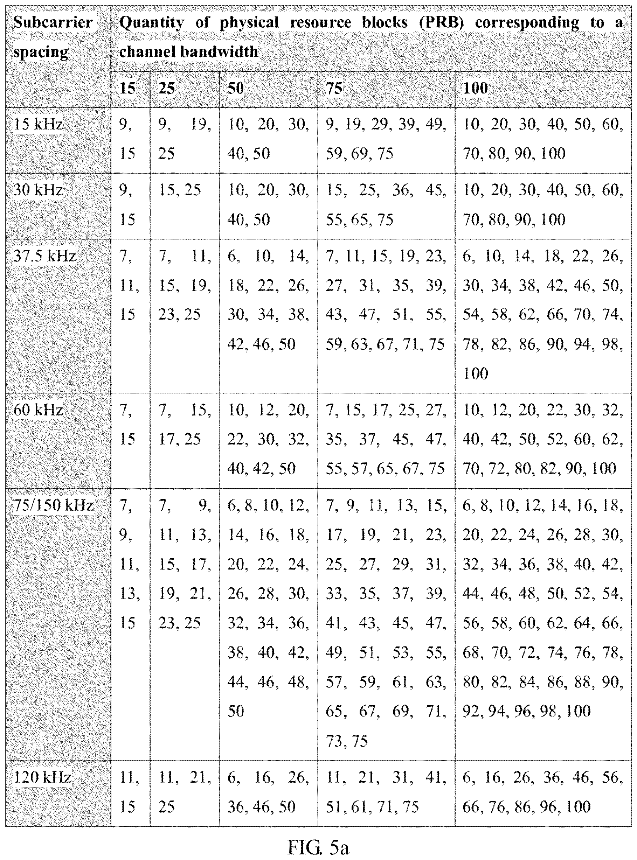

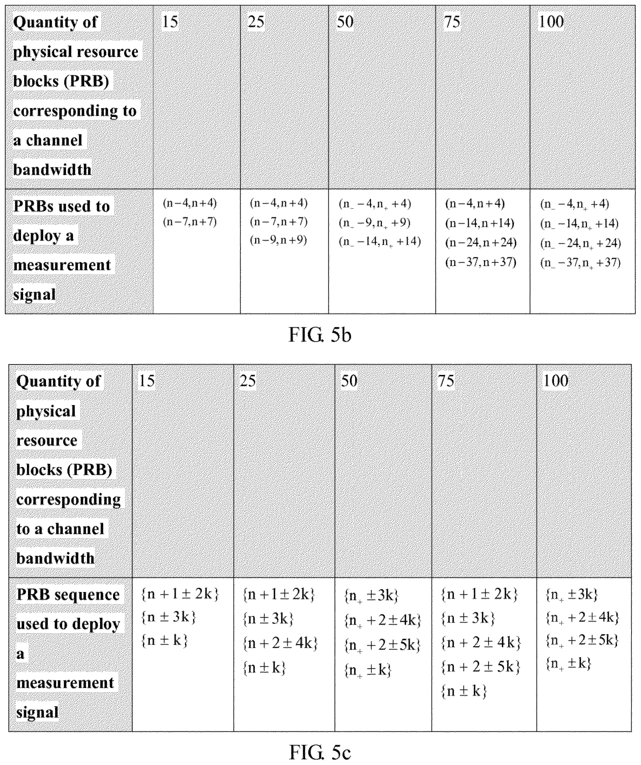

In a possible implementation, the physical resource block used to deploy the measurement signal includes at least two physical resource blocks at consecutive locations. Consecutive locations indicate that resources extending from the middle to two sides of the system resource are continuous without a spacing. Location continuity may be understood as that PRB numbers are continuous. A table, shown in FIG 5a, of comparison between physical resource blocks used to deploy the measurement signal may be obtained through induction and construction based on the table, shown in FIG 4, of comparison between physical resource blocks used to deploy the subsystem. The comparison table shown in FIG 5a describes a quantity of consecutive PRBs that may be used to deploy the measurement signal in a case of each subcarrier spacing and each quantity of PRBs. That the subcarrier spacing is 15 kHz and the quantity of PRBs corresponding to the channel bandwidth is 15 is used as an example. PRBs that may be used to deploy the measurement signal correspond to (9, 15), 9 indicates that the measurement signal may occupy nine consecutive PRBs, in the 15 PRBs, extending from the middle to the two sides, and 15 indicates that the measurement signal may occupy the 15 consecutive PRBs. When the subsystem occupies the PRB numbered 2 and/or the PRB numbered 12, the measurement signal may occupy nine consecutive PRBs numbered 3 to 11. When the subsystem is not deployed, the measurement signal may occupy the 15 consecutive PRBs numbered 0 to 14. FIG 5a lists a relatively large quantity of cases, and complexity is relatively high. Therefore, several representative cases are extracted from the comparison table shown in FIG 5a, to construct another table, shown in FIG 5b, of comparison between physical resource blocks used to deploy the measurement signal. In FIG 5b, if the quantity of PRBs corresponding to the channel bandwidth is an odd number, $n$ represents a middle PRB in the PRBs corresponding to the channel bandwidth. For example, the quantity of PRBs corresponding to the channel bandwidth is 15, the middle PRB is an eighth PRB (a PRB numbered 7), PRBs that may be used to deploy the measurement signal are $(n - 4, n + 4)$, and $(n - 4, n + 4)$ indicates that the PRBs that may be used to deploy the measurement signal are nine consecutive PRBs extending from the middle to the two sides, namely, nine consecutive PRBs numbered 3 to 11. $(n - 7, n + 7)$ indicates that the PRBs that may be used to deploy the measurement signal are 15 consecutive PRBs extending from the middle to the two sides. If the quantity of PRBs corresponding to the channel bandwidth is an even number, $n_-$ and $n_+$ represent two middle PRBs in the PRBs corresponding to the channel bandwidth. For example, the quantity of PRBs corresponding to the channel bandwidth is 50, the two middle PRBs are a 25th PRB (a PRB numbered 24) and a 26th PRB (a PRB numbered 25), PRBs that may be used to deploy the measurement signal are $(n_- - 4, n_+ + 4)$, and $(n_- - 4, n_+ + 4)$ indicates that the PRBs that may be used to deploy the measurement signal are 10 consecutive PRBs extending from the middle to the two sides, namely, ten consecutive PRBs numbered 20 to 29. $(n_- - 9, n_+ + 9)$ indicates that the PRBs that may be used to deploy the measurement signal are 20 consecutive PRBs extending from the middle to the two sides, namely, 20 consecutive PRBs numbered 15 to 34. $(n_- -14, n_+ +14)$ indicates that the PRBs that may be used to deploy the measurement signal are 30 consecutive PRBs extending from the middle to the two sides, namely, 10 consecutive PRBs numbered 10 to 39.

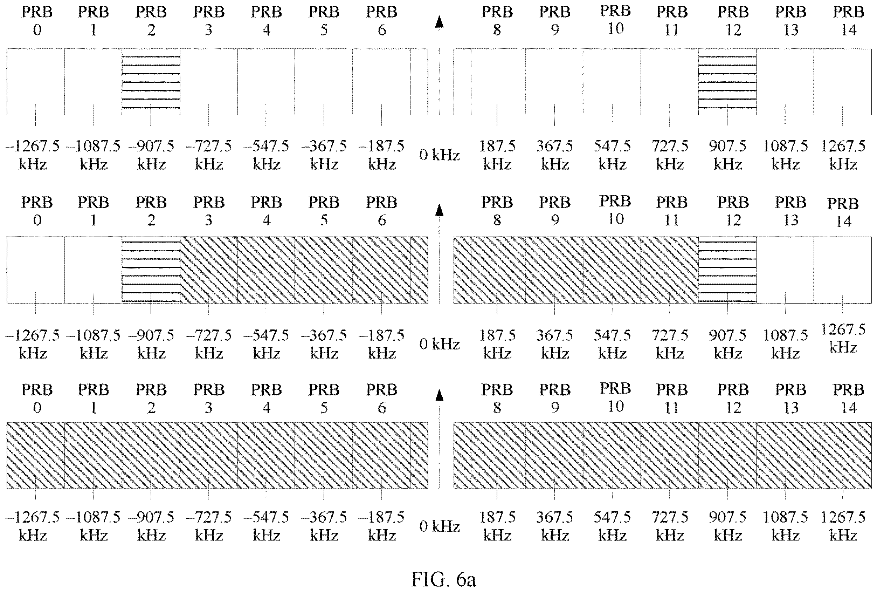

Referring to FIG 6a, FIG 6a is a schematic diagram of consecutive deployment of a measurement signal. In FIG 6a, an example in which the quantity of PRBs corresponding to the channel bandwidth is 15 is used. A center frequency of the PRB numbered 2 is -907.5 kHz, a center frequency of the PRB numbered 12 is 907.5 kHz, a frequency offset is $\pm 7.5$, and an integer multiple of 100 kHz is met. Therefore, the subsystem can be deployed on each of the two PRBs. If the subsystem is deployed on each of the PRBs numbered 2 and 12, namely, PRBs marked with horizontal stripes in a first line and a second line in FIG 6a, the measurement signal may be deployed on each of nine consecutive PRBs numbered 3 to 11, namely, PRBs marked with oblique stripes in the second line in FIG 6a. If the subsystem is not deployed on each of the 15 PRBs, the measurement signal may be deployed on each of the 15 consecutive PRBs, namely, the PRBs marked with oblique stripes in a third line in FIG 6a.

In another possible implementation, the physical resource block used to deploy the measurement signal includes at least two physical resource blocks at evenly-spaced locations. That locations are evenly spaced may be understood as that PRB numbers are discontinuous. Still another table, shown in FIG 5c, of comparison between physical resource blocks used to deploy the measurement signal may be obtained through induction and construction based on the table, shown in FIG 4, of comparison between physical resource blocks used to deploy the subsystem. The comparison table shown in FIG 5c describes a PRB sequence that may be used to deploy the measurement signal in a case of each subcarrier spacing and each quantity of PRBs.

In FIG 5c, $k = 0,1,2,....$ If the quantity of PRBs corresponding to the channel bandwidth is an odd number, $n$

represents a middle PRB in the PRBs corresponding to the channel bandwidth. For example, the quantity of PRBs corresponding to the channel bandwidth is 15, the middle PRB is an eighth PRB (a PRB numbered 7), the PRB sequence that may be used to deploy the measurement signal is $\{n + 1 \pm 2k\}$, and $\{n + 1 \pm 2k\}$ indicates that the PRBs that may be used to deploy the measurement signal are PRBs numbered 0, 2, 4, 6, 8, 10, 12, and 14. $\{n \pm 3k\}$ indicates that the PRBs that may be used to deploy the measurement signal are PRBs numbered 1, 4, 7, 10, and 13. If the quantity of PRBs corresponding to the channel bandwidth is an even number, $n_-$ and $n_+$ represent two middle PRBs in the PRBs corresponding to the channel bandwidth. For example, the quantity of PRBs corresponding to the channel bandwidth is 50, the two middle PRBs are a 25th PRB (a PRB numbered 24) and a 26th PRB (a PRB numbered 25), and the PRB sequence that may be used to deploy the measurement signal is $\{n_+ \pm 3k\}$. There is a relatively large amount of data, and the data are not listed herein one by one. It may be understood that a corresponding PRB sequence indicates that numbers of PRBs are in an arithmetic progression, and the PRBs that may be used to deploy the measurement signal are deployed in an evenly-spaced manner (deployed in a shape of a comb).

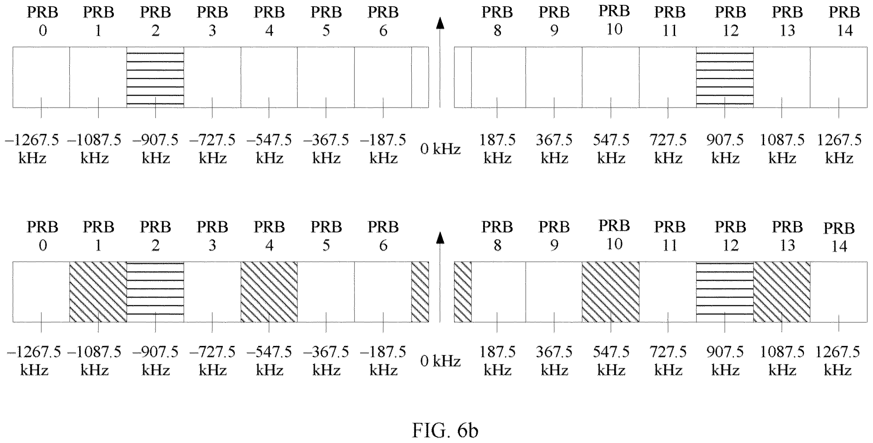

Referring to FIG 6b, FIG 6b is a schematic diagram of evenly-spaced deployment of a measurement signal. In FIG 6b, an example in which the quantity of PRBs corresponding to the channel bandwidth is 15 is used. The subsystem is deployed on each of the PRBs numbered 2 and 12, namely, PRBs marked with horizontal stripes in a first line and a second line in FIG 6b. Based on the PRB sequence $\{n \pm 3k\}$, the measurement signal may be deployed on each of the PRBs numbered 1, 4, 7, 10, and 13, namely, PRBs marked with oblique stripes in FIG 6a. It can be learned that the measurement signal is deployed, in an evenly-spaced manner, on a PRB interleaved with a PRB used to deploy the subsystem, and evenly-spaced deployment may be considered as comb-shaped deployment.

302. Determine a physical resource corresponding to the physical resource block.

Specifically, the network device maps, according to a mapping relationship between a PRB and a resource element (Resource Element, RE), the physical resource block used to deploy the measurement signal, and determines the mapped physical resource. The physical resource is used to transmit the measurement signal. The resource element is a basic unit of the physical resource.

303. Transmit the measurement signal to the user equipment by using the physical resource, where the measurement signal is used by the user equipment to measure channel information.

Specifically, after deploying the measurement signal on the physical resource blocks, the network device may transmit the measurement signal to the user equipment by using the physical resource. To be specific, the physical resource is used as a carrier of the measurement signal for transmission to the user equipment.

Before or after transmitting the measurement signal, the network device further sends a resource indication message to the user equipment. The resource indication message indicates the physical resource block occupied for deploying the measurement signal and/or the physical resource occupied for transmitting the measurement signal. The user equipment is informed, by using the resource indication message, of a specific physical resource block on which the measurement signal is deployed, so that the user equipment searches for the measurement signal on the corresponding physical resource block. The user equipment is informed, by using the resource indication message, of a specific physical resource used to transmit the measurement signal, so that the user equipment searches for a corresponding physical resource block based on the physical resource, to obtain the measurement signal. The resource indication message indicates both the physical resource block and the physical resource, so that the user equipment quickly obtains the measurement signal.

It should be noted that a deployment manner in the following specification is a manner in which the measurement signal occupies a PRB, including consecutive occupation and evenly-spaced occupation. Consecutive occupation is represented by using a quantity of consecutive PRBs, and evenly-spaced occupation is represented by using an evenly-spaced PRB sequence.

According to the invention, the resource indication message is a primary synchronization signal (Primary Synchronization Channel, PSS). The PSS includes a root sequence, and the root sequence indicates the physical resource block occupied for deploying the measurement signal and/or the physical resource occupied for transmitting the measurement signal. In LTE, different cells are distinguished from each other at a physical layer by using physical cell IDs (Physical Cell Identities, PCI). There are 504 physical cell IDs in total, the 504 physical cell IDs are divided into 168 different groups (marked as $N_{ID}^{(1)}$ and ranging from 0 to 167), and each group includes three different intra-group identifiers (marked as $N_{ID}^{(2)}$ and ranging from 0 to 2). Therefore, the physical cell ID (marked as $N_{ID}^{cell}$) may be obtained through calculation according to a formula $PCI = N_{ID}^{cell} = 3N_{ID}^{(1)} + N_{ID}^{(2)}$. A secondary synchronization

signal (Secondary Synchronization Signal, SSS) is used to transmit an intra-group ID, namely, a value of $N_{ID}^{(1)}$ . A specific method is as follows: An eNB generates two index values by using a value of a group ID $N_{ID}^{(1)}$ , introduces a value of the intra-group ID $N_{ID}^{(2)}$ , and performs encoding to generate two sequences whose lengths are both 31, and maps the sequences to REs corresponding to the SSS. UE may learn, by performing blind detection on the sequences, a sequence currently delivered by the eNB, and therefore obtain $N_{ID}^{(1)}$ of a current cell. The PSS is used to transmit an intra-group ID, namely, a value of $N_{ID}^{(2)}$ . A specific method is as follows: The eNB associates a value of the intra-group ID $N_{ID}^{(2)}$ with a root sequence index $u$, performs encoding to generate a ZC sequence $d_u(n)$ whose length is 62, and maps the sequence to an RE corresponding to the PSS. The UE may learn $N_{ID}^{(2)}$ of a current cell by performing blind detection on the sequence. The ZC sequence $d_u(n)$ and a table of association between the value of $N_{ID}^{(2)}$ and the root sequence index $u$ are shown below:

| $N_{ID}^{(2)}$ | Root sequence index $u$ |
|---|---|
| 0 | 25 |
| 1 | 29 |
| 2 | 34 |

$$d_u(n) = \begin{cases} e^{-j\frac{\pi u n(n+1)}{63}} & n = 0, 1, \ldots, 30 \\ e^{-j\frac{\pi u (n+1)(n+2)}{63}} & n = 31, 32, \ldots, 61 \end{cases}$$

For example, the eNB associates a value 1 of $N_{ID}^{(2)}$ with a root sequence index 29, performs encoding to generate a ZC sequence $d_u(n)$ whose length is 62, and maps the sequence to the RE corresponding to the PSS. The UE may learn, by performing blind detection on the sequence, that a value of $N_{ID}^{(2)}$ of the current cell is 1. In this implementation of the present disclosure, the root sequence included in the PSS is the root sequence index, and one root sequence corresponds to one value of $N_{ID}^{(2)}$ and one deployment manner.

Optionally, the deployment manner is a quantity of PRBs occupied during consecutive deployment. For a specific root sequence, a value of $N_{ID}^{(2)}$ , and a quantity of consecutively deployed PRBs, refer to the following table. In the following table, $\pm4$ corresponds to a deployment manner of ($n$ - 4,$n$ + 4) or ($n_-$ - 4,$n_+$ + 4) in FIG 5b, and indicates that nine consecutive PRBs or 10 consecutive PRBs are occupied; $\pm7$ corresponds to a deployment manner of ($n$ - 7,$n$ + 7) in FIG 5b, and indicates that 15 consecutive PRBs are occupied; $\pm9$ corresponds to a deployment manner of ($n$ - 9,$n$ + 9) or ($n_-$ - 9,$n_+$ + 9) in FIG 5b, and indicates that 19 consecutive PRBs or 20 consecutive PRBs are occupied; $\pm14$

corresponds to a deployment manner of $(n_- - 14, n_+ + 14)$ in FIG 5b, and indicates that 30 consecutive PRBs are occupied; $\pm 24$ corresponds to a deployment manner of $(n - 24, n + 24)$ or $(n_- - 24, n_+ + 24)$ in FIG 5b, and indicates that 49 consecutive PRBs or 50 consecutive PRBs are occupied; and $\pm 37$ corresponds to a deployment manner of $(n - 37, n + 37)$ or $(n_- - 37, n_+ + 37)$ in FIG. 5b, and indicates that 75 consecutive PRBs or 76 consecutive PRBs are occupied.

| $N_{ID}^{(2)}$　　　　PRB | ±4 | ±7 | ±9 | ±14 | ±24 | ±37 |
|---|---|---|---|---|---|---|
| **0** | 25 | 31 | 47 | 57 | 71 | 83 |
| **1** | 29 | 41 | 51 | 61 | 73 | 87 |
| **2** | 34 | 43 | 53 | 67 | 79 | 89 |

For example, the root sequence included in the PSS is 25. In this case, the corresponding value of $N_{ID}^{(2)}$ is 0, and the deployment manner is $(n - 4, n + 4)$ or $(n_- - 4, n_+ + 4)$. When receiving the PSS, the user equipment obtains, through parsing, that the root sequence in the PSS is 25; and determines, based on the root sequence 25, that the deployment manner is $(n-4, n+4)$ or $(n_- - 4, n_+ + 4)$. To be specific, four PRBs extend from a middle PRB of a frequency band to each of two sides of the frequency band, and the measurement signal is deployed on each of the series of consecutive PRBs. It should be noted that specific values of the root sequence in the foregoing table are used as an example for description, and constitute no limitation to this implementation of the present disclosure. The network device and the user equipment both store the foregoing table, so that the user equipment can accurately learn of the deployment manner.

Optionally, the deployment manner is a PRB sequence occupied during evenly-spaced deployment. For a specific root sequence, a value of $N_{ID}^{(2)}$, and a PRB sequence, refer to the following table. In the following table, $+1 \pm 2k$ corresponds to a deployment manner of the PRB sequence $\{n + 1 \pm 2k\}$ in FIG 5c; $\pm 3k$ corresponds to a deployment manner of the PRB sequence $\{n \pm 3k\}$ or $\{n_+ \pm 3k\}$ in FIG 5c; $+2 \pm 4k$ corresponds to a deployment manner of a PRB sequence $\{n + 2 \pm 4k\}$ or $\{n_+ + 2 \pm 4k\}$ in FIG 5c; $+2 \pm 5k$ corresponds to a deployment manner of a PRB sequence $\{n + 2 \pm 5k\}$ or $\{n_+ + 2 \pm 5k\}$ in FIG 5c; and $\pm k$ corresponds to a deployment manner of a PRB sequence $\{n \pm k\}$ or $\{n_+ \pm k\}$ in FIG 5c.

| $N_{ID}^{(2)}$　　　　PRB | $+1 \pm 2k$ | $\pm 3k$ | $+2 \pm 4k$ | $+2 \pm 5k$ | $\pm k$ |
|---|---|---|---|---|---|
| **0** | 91 | 101 | 109 | 119 | 129 |
| **1** | 93 | 103 | 111 | 123 | 131 |
| **2** | 97 | 107 | 113 | 127 | 133 |

For example, the root sequence included in the PSS is 101. In this case, the corresponding value of $N_{ID}^{(2)}$ is 0, and the deployment manner is $\{n \pm 3k\}$ or $\{n_+ \pm 3k\}$. When receiving the PSS, the user equipment obtains, through parsing, that the root sequence in the PSS is 101; and determines, based on the root sequence 101, that the deployment manner is $\{n \pm 3k\}$ or $\{n_+ \pm 3k\}$. To be specific, a PRB sequence extends from a middle PRB of a frequency band to two sides of the frequency band in an evenly-spaced manner, and the measurement signal is deployed on the PRB sequence. It should be noted that specific values of the root sequence in the foregoing table are used as an example for description, and constitute no limitation to this implementation of the present disclosure. The network device and the user equipment both store the foregoing table, so that the user equipment can accurately learn of the deployment manner.

In an example implementation not covered by the claimed invention, the resource indication message is a broadcast message, and the broadcast message indicates the physical resource block occupied for deploying the measurement signal and/or the physical resource occupied for transmitting the measurement signal. The broadcast message includes a resource indication bit, and a value of the resource indication bit indicates the physical resource block occupied for deploying the measurement signal and/or the physical resource occupied for transmitting the measurement signal. The broadcast message may include but is not limited to a system information block (Master Information Block, MIB) message. The MIB message includes a resource indication bit, 3 bits may be used to represent the resource indication bit, and the 3 bits may represent eight possible deployment manners. The foregoing two tables respectively list six deployment manners and five deployment manners, and therefore the 3 bits may represent the deployment manners listed in the foregoing two tables. The MIB message further includes the channel bandwidth and the system resource that are configured by the network device for the user equipment. The network device may pre-determine a deployment manner corresponding to each value of the resource indication bit, for example, 001 represents $\pm 7$ or $+1 \pm 2k$. The MIB message is broadcast to the user equipment on a physical broadcast channel (Physical Broadcast Channel, PBCH). The user equipment receives the MIB message by using the PBCH channel, and determines, based on a value indicated by the resource indication bit, a deployment manner of the measurement signal, that is, the physical resource block occupied for deploying the measurement signal or the physical resource occupied for transmitting the measurement signal.

When receiving the resource indication information, the user equipment determines, based on the resource indication information, a PRB occupied by the measurement signal; and receives, on the corresponding PRB, the measurement signal transmitted by the network device. The user equipment measures the channel information based on the measurement signal. The channel information includes at least one of reference signal received power (Reference Signal Received Power, RSRP), a received signal strength indicator (Received Signal Strength Indicator, RSSI), and reference signal received quality (Reference Signal Received Quality, RSRQ). The RSRP is a power value of a measurement signal or a CRS received by the user equipment, and the value is a linear average of powers of a single RE in a measurement bandwidth, and reflects strength of a desired signal in a current cell. The RSSI is a linear average of powers of all signals (for example, an intra-frequency desired signal and an interference signal, adjacent-frequency interference, and thermal noise) received by the user equipment, and reflects load strength on the resource. The RSRQ is N times as large as a ratio of the RSRP to the RSSI, that is, $RSRQ = N \times RSRP/RSSI$. N represents a quantity of REs included in the measurement bandwidth of the RSRI, and can reflect relative magnitudes of the signal and the interference.

The user equipment may measure the channel information based on the measurement signal, and may further perform fine time-frequency synchronization based on the measurement signal.

In this implementation of the present disclosure, the physical resource block used to deploy the measurement signal is determined, and the physical resource block is the subset of all the physical resource blocks in frequency domain corresponding to the channel bandwidth of the user equipment; the physical resource corresponding to the physical resource block is determined; and the measurement signal is transmitted to the user equipment by using the physical resource, and the measurement signal is used by the user equipment to measure the channel information. This avoids that measurement signal deployment and subsystem deployment occupy a same physical resource block, or reduces a probability that measurement signal deployment and subsystem deployment occupy a same physical resource block, thereby reducing impact between measurement signal deployment and subsystem deployment, and ensuring measurement performance of the measurement signal.

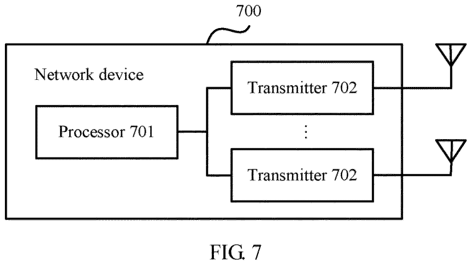

Referring to FIG 7, FIG 7 is a schematic structural diagram of a network device according to an implementation of the present disclosure. The network device 700 includes a processor 701, a transmitter 702, and an antenna.

The processor 701 is configured to determine a physical resource block used to deploy a measurement signal, where the physical resource block is a subset of all physical resource blocks in frequency domain corresponding to a channel bandwidth of user equipment.

In specific implementation, the processor 701 is specifically configured to determine, based on a physical resource block occupied for deploying a subsystem, the physical resource block used to deploy the measurement signal.

The processor 701 is further configured to determine a physical resource corresponding to the physical resource block.

The transmitter 702 is configured to transmit the measurement signal to the user equipment by using the physical resource, where the measurement signal is used by the user equipment to measure channel information.

According to the claimed invention, the transmitter 702 is further configured to send a resource indication message to the user equipment, where the resource indication message indicates the physical resource block occupied for deploying the measurement signal and/or the physical resource occupied for transmitting the measurement signal.

According to the claimed invention, the resource indication message is a primary synchronization signal PSS, and a root sequence of the PSS indicates the physical resource block occupied for deploying the measurement signal and/or the physical resource occupied for transmitting the measurement signal.

In an example implementation not covered by the claimed invention, the resource indication message is a broadcast message, and the broadcast message indicates the physical resource block occupied for deploying the measurement signal and/or the physical resource occupied for transmitting the measurement signal.

Optionally, the physical resource block includes at least two physical resource blocks at consecutive locations.

Optionally, the physical resource block includes at least two physical resource blocks at evenly-spaced locations.

Optionally, the channel information includes at least one of reference signal received power RSRP, a received signal strength indicator RSSI, and reference signal received quality RSRQ.

It should be noted that the processor 701 is configured to perform steps 301 and 302 in the implementation shown in FIG 3. The transmitter 702 is configured to perform step 303 in the implementation shown in FIG 3, and send the resource indication message to the user equipment.

The processor 701 may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logic blocks, modules, and circuits that are described with reference to content disclosed in the present disclosure. The processor 701 may be a combination implementing a computing function, for example, a combination including one or more microprocessors, or a combination of a DSP and a microprocessor. The processor 701 may be alternatively a controller. The processor 701 mainly includes four components: a cell controller, a voice channel controller, a signaling channel controller, and a multi-port interface used for extension. The processor 701 is responsible for management of all mobile communications interfaces, and is mainly responsible for radio channel allocation, release, and management.

The transmitter 702 may be a transceiver, a transceiver circuit, a communications module, a communications interface, or the like. The transceiver includes a receiver and a transmitter. The user equipment may transmit uplink data by using the transmitter and receive downlink data by using the receiver.

An implementation of the present disclosure further provides a computer storage medium, configured to store a computer software instruction used by the network device. The computer software instruction includes a program designed for performing the foregoing aspect.

It should be noted that, to make the description brief, the foregoing method implementations are expressed as a series of actions. However, a person skilled in the art should appreciate that the present disclosure is not limited to the described action sequence, because according to the present disclosure, some steps may be performed in other sequences or performed simultaneously. In addition, a person skilled in the art should also appreciate that all the implementations described in this specification are implementations as an example, and the related actions and modules are not necessarily mandatory to the present disclosure.

In the foregoing implementations, the descriptions of the implementations have respective focuses. For a part that is not described in detail in an implementation, refer to related descriptions in other implementations.

Steps in the method in the implementations of the present disclosure may be adjusted, combined, or deleted according to an actual requirement.

Units in the apparatus in the implementations of the present disclosure may be adjusted, combined, or deleted according to an actual requirement. A person skilled in the art may integrate or combine different implementations and characteristics of different implementations described in this specification.

With descriptions of the foregoing implementations, a person skilled in the art may clearly understand that the present disclosure may be implemented by hardware, firmware or a combination thereof. When the present disclosure is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is used as an example but is not limited: The computer readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disc storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (Digital Subscriber Line, DSL), or wireless technologies such as infrared ray, radio, and microwave, the coaxial cable, optical fiber/cable, twisted pair, DSL, or wireless technologies such as infrared ray, radio, and microwave are included in fixation of a medium to which they belong. For example, a disk (Disk) and disc (disc) used in the present disclosure include a compact disc (CD), a laser disc, an optical disc, a digital versatile disc (DVD), a floppy disk, and a Blu-ray disc, where the disk generally copies data by a magnetic means, and the disc copies data optically by a laser means. The foregoing combination should also be included in the protection scope of the computer-readable medium.

The scope of protection shall be defined by the appended claims.

**Claims**

1. A measurement signal transmission method, comprising:

   determining (301) a physical resource block for deploying a measurement signal, wherein the physical resource block is a subset of all physical resource blocks in frequency domain corresponding to a channel bandwidth of user equipment, wherein the physical resource block comprises at least two physical resource blocks at consecutive locations; or wherein the physical resource block comprises at least two physical resource blocks at evenly-spaced locations;
   determining (302) a resource element corresponding to the physical resource block according to a mapping relationship between the physical resource block and the resource element; and
   transmitting (303) the measurement signal to the user equipment by using the resource element, wherein the measurement signal is used by the user equipment to measure channel information, wherein the channel information comprises at least one of reference signal received power RSRP, a received signal strength indicator RSSI, or reference signal received quality RSRQ;
   wherein the method further comprises:

   sending a resource indication message to the user equipment, wherein the resource indication message indicates the physical resource block occupied for deploying the measurement signal and/or the physical resource occupied for transmitting the measurement signal;
   wherein the resource indication message is a primary synchronization signal, PSS, and a root sequence of the PSS indicates the physical resource block occupied for deploying the measurement signal.

2. The method according to claim 1, wherein the determining a physical resource block used to deploy a measurement signal comprises:
   determining, based on a physical resource block occupied for deploying a subsystem, the physical resource block used to deploy the measurement signal.

3. A network device, comprising a processor (701) and a transmitter (702):
   the processor configured for:

   determining a physical resource block for deploying a measurement signal, wherein the physical resource block is a subset of all physical resource blocks in frequency domain corresponding to a channel bandwidth of user equipment, wherein the physical resource block comprises at least two physical resource blocks at consecutive locations; or wherein the physical resource block comprises at least two physical resource blocks at evenly-spaced locations;
   determining a resource element corresponding to the physical resource block according to a mapping relationship between the physical resource block and the resource element; and
   transmitting the measurement signal to the user equipment by using the resource element, wherein the measurement signal is used by the user equipment to measure channel information, wherein the channel information comprises at least one of reference signal received power RSRP, a received signal strength indicator RSSI, or reference signal received quality RSRQ;
   wherein
   the transmitter is further configured to send a resource indication message to the user equipment, wherein the resource indication message indicates the physical resource block occupied for deploying the measurement signal and/or the physical resource occupied for transmitting the measurement signal;
   wherein the resource indication message is a primary synchronization signal PSS, and a root sequence of the PSS indicates the physical resource block occupied for deploying the measurement signal.

4. The network device according to claim 3, wherein the processor is specifically configured to determine, based on a physical resource block occupied for deploying a subsystem, the physical resource block used to deploy the measurement signal.

**Patentansprüche**

1. Messsignalsendeverfahren, das umfasst:

   Bestimmen (301) eines physikalischen Ressourcenblocks zum Bereitstellen eines Messsignals, wobei der physikalische Ressourcenblock eine Teilmenge aller physikalischen Ressourcenblöcke in einem Frequenzbereich, die einer Kanalbandbreite einer Benutzereinrichtung entspricht, ist, wobei der physikalische Ressourcenblock mindestens zwei physikalische Ressourcenblöcke an aufeinanderfolgenden Positionen umfasst; oder wobei der physikalische Ressourcenblock mindestens zwei physikalische Ressourcenblöcke an gleichmäßig beabstandeten Positionen umfasst;
   Bestimmen (302) eines Ressourcenelements, das dem physikalischen Ressourcenblock entspricht, gemäß einer Zuordnungsbeziehung zwischen dem physikalischen Ressourcenblock und dem Ressourcenelement; und Senden (303) des Messsignals an die Benutzereinrichtung durch Verwenden des Ressourcenelements, wobei das Messsignal durch die Benutzereinrichtung verwendet wird, um Kanalinformationen zu messen, wobei die Kanalinformationen mindestens eines von einer Referenzsignalempfangsleistung RSRP, einem Empfangssignalstärkeanzeiger RSSI oder einer Referenzsignalempfangsqualität RSRQ umfassen;
   wobei das Verfahren ferner umfasst:

   Übertragen einer Ressourcenanzeigenachricht an die Benutzereinrichtung, wobei die Ressourcenanzeigenachricht den physikalischen Ressourcenblock, der zum Bereitstellen des Messsignals belegt ist, und/oder die physikalische Ressource, die zum Senden des Messsignals belegt ist, anzeigt;
   wobei die Ressourcenanzeigenachricht ein primäres Synchronisierungssignal, PSS, ist und eine Wurzelsequenz des PSS den physikalischen Ressourcenblock, der zum Bereitstellen des Messsignals belegt ist, anzeigt.

2. Verfahren nach Anspruch 1, wobei das Bestimmen eines physikalischen Ressourcenblocks, der verwendet wird, um ein Messsignal bereitzustellen, umfasst:
   Bestimmen, basierend auf einem physikalischen Ressourcenblock, der zum Bereitstellen eines Teilsystems belegt ist, des physikalischen Ressourcenblocks, der verwendet wird, um das Messsignal bereitzustellen.

3. Netzwerkvorrichtung, die einen Prozessor (701) und einen Sender (702) umfasst:
   wobei der Prozessor konfiguriert ist zum:

   Bestimmen eines physikalischen Ressourcenblocks zum Bereitstellen eines Messsignals, wobei der physikalische Ressourcenblock eine Teilmenge aller physikalischen Ressourcenblöcke in dem Frequenzbereich, die einer Kanalbandbreite einer Benutzereinrichtung entspricht, ist, wobei der physikalische Ressourcenblock mindestens zwei physikalische Ressourcenblöcke an aufeinanderfolgenden Positionen umfasst; oder wobei der physikalische Ressourcenblock mindestens zwei physikalische Ressourcenblöcke an gleichmäßig beabstandeten Positionen umfasst;
   Bestimmen eines Ressourcenelements, das dem physikalischen Ressourcenblock entspricht, gemäß einer Zuordnungsbeziehung zwischen dem physikalischen Ressourcenblock und dem Ressourcenelement; und Senden des Messsignals an die Benutzereinrichtung durch Verwenden des Ressourcenelements, wobei das Messsignal durch die Benutzereinrichtung verwendet wird, um Kanalinformationen zu messen, wobei die Kanalinformationen mindestens eines von der Referenzsignalempfangsleistung RSRP, einem Empfangssignalstärkeanzeiger RSSI oder der Referenzsignalempfangsqualität RSRQ umfasst;
   wobei
   der Sender ferner konfiguriert ist, um eine Ressourcenanzeigenachricht an die Benutzereinrichtung zu übertragen, wobei die Ressourcenanzeigenachricht den physikalischen Ressourcenblock, der zum Bereitstellen des Messsignals belegt ist, und/oder die physikalische Ressource, die zum Senden des Messsignals belegt ist, anzeigt;
   wobei die Ressourcenanzeigenachricht ein primäres Synchronisationssignal PSS ist und eine Wurzelsequenz des PSS den physikalischen Ressourcenblock, der zum Bereitstellen des Messsignals belegt ist, anzeigt.

4. Netzwerkvorrichtung nach Anspruch 3, wobei der Prozessor speziell konfiguriert ist, um, basierend auf einem physikalischen Ressourcenblock, der zum Bereitstellen eines Teilsystems belegt ist, den physikalischen Ressourcenblock, der verwendet wird, um das Messsignal bereitzustellen, zu bestimmen.

**Revendications**

1.  Procédé de transmission de signal de mesure, comprenant :

    la détermination (301) d'un bloc de ressources physiques pour le déploiement d'un signal de mesure, dans lequel le bloc de ressources physiques est un sous-ensemble de tous les blocs de ressources physiques dans un domaine fréquence correspondant à une largeur de bande de canal d'un équipement utilisateur, dans lequel le bloc de ressources physiques comprend au moins deux blocs de ressources physiques situés à des emplacements consécutifs ; ou dans lequel le bloc de ressources physiques comprend au moins deux blocs de ressources physiques situés à des emplacements régulièrement espacés ;
    la détermination (302) d'un élément ressource correspondant au bloc de ressources physiques selon une relation de mappage entre le bloc de ressources physiques et l'élément ressource ; et
    la transmission (303) du signal de mesure à l'équipement utilisateur à l'aide de l'élément ressource, dans lequel le signal de mesure est utilisé par l'équipement utilisateur pour mesurer des informations de canal, dans lequel les informations de canal comprennent au moins l'un parmi puissance reçue de signal de référence RSRP, indicateur de force de signal reçu RSSI ou qualité reçue de signal de référence RSRQ ;
    dans lequel le procédé comprend en outre :

    l'envoi d'un message d'indication de ressource à l'équipement utilisateur, dans lequel le message d'indication de ressource indique le bloc de ressources physiques occupé au déploiement du signal de mesure et/ou la ressource physique occupée à la transmission du signal de mesure ;
    dans lequel le message d'indication de ressource est un signal de synchronisation primaire, PSS, et une séquence racine du PSS indique le bloc de ressources physiques occupé au déploiement du signal de mesure.

2.  Procédé selon la revendication 1, dans lequel la détermination d'un bloc de ressources physiques utilisé pour déployer un signal de mesure comprend :
    la détermination, sur la base d'un bloc de ressources physiques occupé au déploiement d'un sous-système, du bloc de ressources physiques utilisé pour déployer le signal de mesure.

3.  Dispositif réseau, comprenant un processeur (701) et un émetteur (702) :
    le processeur étant configuré pour :

    déterminer un bloc de ressources physiques pour le déploiement d'un signal de mesure, dans lequel le bloc de ressources physiques est un sous-ensemble de tous les blocs de ressources physiques dans un domaine fréquence correspondant à une largeur de bande de canal d'un équipement utilisateur, dans lequel le bloc de ressources physiques comprend au moins deux blocs de ressources physiques situés à des emplacements consécutifs ; ou dans lequel le bloc de ressources physiques comprend au moins deux blocs de ressources physiques situés à des emplacements régulièrement espacés ;
    déterminer un élément ressource correspondant au bloc de ressources physiques selon une relation de mappage entre le bloc de ressources physiques et l'élément ressource ; et
    transmettre le signal de mesure à l'équipement utilisateur à l'aide de l'élément ressource, dans lequel le signal de mesure est utilisé par l'équipement utilisateur pour mesurer des informations de canal, dans lequel les informations de canal comprennent au moins l'un parmi puissance reçue de signal de référence RSRP, indicateur de force de signal reçu RSSI ou qualité reçue de signal de référence RSRQ ;
    dans lequel
    l'émetteur est en outre configuré pour envoyer un message d'indication de ressource à l'équipement utilisateur, dans lequel le message d'indication de ressource indique le bloc de ressources physiques occupé au déploiement du signal de mesure et/ou la ressource physique occupée à la transmission du signal de mesure ;
    dans lequel le message d'indication de ressource est un signal de synchronisation primaire PSS, et une séquence racine du PSS indique le bloc de ressources physiques occupé au déploiement du signal de mesure.

4.  Dispositif réseau selon la revendication 3, dans lequel le processeur est spécifiquement configuré pour déterminer, sur la base d'un bloc de ressources physiques occupé au déploiement d'un sous-système, le bloc de ressources physiques utilisé pour déployer le signal de mesure.

FIG. 1

Table of mapping between a channel bandwidth and a quantity of physical resource blocks (PRB)

| Channel bandwidth | 1.4 MHz | 3 MHz | 5 MHz | 10 MHz | 15 MHz | 20 MHz |
|---|---|---|---|---|---|---|
| Quantity of PRBs | 6 | 15 | 25 | 50 | 75 | 100 |

FIG. 2

Determine a physical resource block used to deploy a measurement signal, where the physical resource block is a subset of all physical resource blocks in frequency domain corresponding to a channel bandwidth of user equipment — 301

Determine a physical resource corresponding to the physical resource block — 302

Transmit the measurement signal to the user equipment by using the physical resource, where the measurement signal is used by the user equipment to measure channel information — 303

FIG. 3

| Subcarrier spacing | PRB width | Quantity of physical resource blocks (PRB) corresponding to a channel bandwidth | | | | |
|---|---|---|---|---|---|---|
| | | 15 | 25 | 50 | 75 | 100 |
| 15 kHz | 180 kHz | 2; 12 | 2, 7; 17, 22 | 4, 9, 14, 19; 30, 35, 40, 45 | 2, 7, 12, 17, 22, 27, 32; 42, 47, 52, 57, 62, 67, 72 | 4, 9, 14, 19, 24, 29, 34, 39, 44; 55, 60, 65, 70, 75, 80, 85, 90, 95 |
| 30 kHz | 360 kHz | 2; 12 | 4; 20 | 4, 9, 14, 19; 30, 35, 40, 45 | 4, 9, 14, 19, 24, 29; 45, 50, 55, 60, 65, 70 | 4, 9, 14, 19, 24, 29, 34, 39, 44; 55, 60, 65, 70, 75, 80, 85, 90, 95 |
| 37.5 kHz | 450 kHz | 1, 3; 11, 13 | 0, 2, 4, 6, 8; 14, 16, 18, 20, 22, 24 | 1, 3, 5, 7, 9, 11, 13, 15, 17, 19, 21; 28, 30, 32, 34, 36, 38, 40, 42, 44, 46, 48 | 1, 3, 5, 7, 9, 11, 13, 15, 17, 19, 21, 23, 25, 27, 29, 31, 33; 41, 43, 45, 47, 49, 51, 53, 55, 57, 59, 61, 63, 65, 67, 69, 71, 73 | 0, 2, 4, 6, 8; 14, 16, 18, 20, 22, 24, 26, 28, 30, 32, 34, 36, 38, 40, 42, 44, 46; 53, 55, 57, 59, 61, 63, 65, 67, 69, 71, 73, 75, 77, 79, 81, 83, 85, 87, 89, 91, 93, 95, 97, 99 |
| 60 kHz | 720 kHz | 3; 11 | 3, 4, 8; 16, 20, 21 | 3, 4, 8, 9, 13, 14, 18, 19; 30, 31, 35, 36, 40, 41, 45, 46 | 3, 4, 8, 9, 13, 14, 18, 19, 23, 24, 28, 29, 33; 41, 45, 46, 50, 51, 55, 56, 60, 61, 65, 66, 70, 71 | 3, 4, 8, 9, 13, 14, 18, 19, 23, 24, 28, 29, 33, 34, 38, 39, 43, 44; 55, 56, 60, 61, 65, 66, 70, 71, 75, 76, 80, 81, 85, 86, 90, 91, 95, 96 |
| 75 kHz | 900 kHz | Each physical resource block (PRB) | | | | |

| 120 kHz | 1440 kHz | 1; 13 | 1, 6; 18, 23 | 1, 6, 11, 16, 21; 28, 33, 38, 42, 48 | 1, 6, 11, 16, 21, 26, 31; 43, 48, 53, 58, 63, 68, 73 | 1, 6, 11, 16, 21, 26, 31, 36, 41, 46; 53, 58, 63, 68, 73, 78, 83, 88, 93, 98 |
|---------|----------|-------|---------|------------------|-------------------|----------------------------|
| 150 kHz | 1800 kHz | Each physical resource block (PRB) | | | | |

FIG. 4

| Subcarrier spacing | Quantity of physical resource blocks (PRB) corresponding to a channel bandwidth | | | | |
|---|---|---|---|---|---|
| | 15 | 25 | 50 | 75 | 100 |
| 15 kHz | 9, 15 | 9, 19, 25 | 10, 20, 30, 40, 50 | 9, 19, 29, 39, 49, 59, 69, 75 | 10, 20, 30, 40, 50, 60, 70, 80, 90, 100 |
| 30 kHz | 9, 15 | 15, 25 | 10, 20, 30, 40, 50 | 15, 25, 36, 45, 55, 65, 75 | 10, 20, 30, 40, 50, 60, 70, 80, 90, 100 |
| 37.5 kHz | 7, 11, 15 | 7, 11, 15, 19, 23, 25 | 6, 10, 14, 18, 22, 26, 30, 34, 38, 42, 46, 50 | 7, 11, 15, 19, 23, 27, 31, 35, 39, 43, 47, 51, 55, 59, 63, 67, 71, 75 | 6, 10, 14, 18, 22, 26, 30, 34, 38, 42, 46, 50, 54, 58, 62, 66, 70, 74, 78, 82, 86, 90, 94, 98, 100 |
| 60 kHz | 7, 15 | 7, 15, 17, 25 | 10, 12, 20, 22, 30, 32, 40, 42, 50 | 7, 15, 17, 25, 27, 35, 37, 45, 47, 55, 57, 65, 67, 75 | 10, 12, 20, 22, 30, 32, 40, 42, 50, 52, 60, 62, 70, 72, 80, 82, 90, 100 |
| 75/150 kHz | 7, 9, 11, 13, 15 | 7, 9, 11, 13, 15, 17, 19, 21, 23, 25 | 6, 8, 10, 12, 14, 16, 18, 20, 22, 24, 26, 28, 30, 32, 34, 36, 38, 40, 42, 44, 46, 48, 50 | 7, 9, 11, 13, 15, 17, 19, 21, 23, 25, 27, 29, 31, 33, 35, 37, 39, 41, 43, 45, 47, 49, 51, 53, 55, 57, 59, 61, 63, 65, 67, 69, 71, 73, 75 | 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96, 98, 100 |
| 120 kHz | 11, 15 | 11, 21, 25 | 6, 16, 26, 36, 46, 50 | 11, 21, 31, 41, 51, 61, 71, 75 | 6, 16, 26, 36, 46, 56, 66, 76, 86, 96, 100 |

FIG. 5a

| Quantity of physical resource blocks (PRB) corresponding to a channel bandwidth | 15 | 25 | 50 | 75 | 100 |
|---|---|---|---|---|---|
| PRBs used to deploy a measurement signal | $(n-4,n+4)$ <br> $(n-7,n+7)$ | $(n-4,n+4)$ <br> $(n-7,n+7)$ <br> $(n-9,n+9)$ | $(n_--4,n_++4)$ <br> $(n_--9,n_++9)$ <br> $(n_--14,n_++14)$ | $(n-4,n+4)$ <br> $(n-14,n+14)$ <br> $(n-24,n+24)$ <br> $(n-37,n+37)$ | $(n_--4,n_++4)$ <br> $(n_--14,n_++14)$ <br> $(n_--24,n_++24)$ <br> $(n_--37,n_++37)$ |

FIG. 5b

| Quantity of physical resource blocks (PRB) corresponding to a channel bandwidth | 15 | 25 | 50 | 75 | 100 |
|---|---|---|---|---|---|
| PRB sequence used to deploy a measurement signal | $\{n+1\pm2k\}$ <br> $\{n\pm3k\}$ <br> $\{n\pm k\}$ | $\{n+1\pm2k\}$ <br> $\{n\pm3k\}$ <br> $\{n+2\pm4k\}$ <br> $\{n\pm k\}$ | $\{n_+\pm3k\}$ <br> $\{n_++2\pm4k\}$ <br> $\{n_++2\pm5k\}$ <br> $\{n_+\pm k\}$ | $\{n+1\pm2k\}$ <br> $\{n\pm3k\}$ <br> $\{n+2\pm4k\}$ <br> $\{n+2\pm5k\}$ <br> $\{n\pm k\}$ | $\{n_+\pm3k\}$ <br> $\{n_++2\pm4k\}$ <br> $\{n_++2\pm5k\}$ <br> $\{n_+\pm k\}$ |

FIG. 5c

EP 3 493 451 B1

| PRB 0 | PRB 1 | PRB 2 | PRB 3 | PRB 4 | PRB 5 | PRB 6 | | PRB 8 | PRB 9 | PRB 10 | PRB 11 | PRB 12 | PRB 13 | PRB 14 |

−1267.5 kHz −1087.5 kHz −907.5 kHz −727.5 kHz −547.5 kHz −367.5 kHz −187.5 kHz 0 kHz 187.5 kHz 367.5 kHz 547.5 kHz 727.5 kHz 907.5 kHz 1087.5 kHz 1267.5 kHz

| PRB 0 | PRB 1 | PRB 2 | PRB 3 | PRB 4 | PRB 5 | PRB 6 | | PRB 8 | PRB 9 | PRB 10 | PRB 11 | PRB 12 | PRB 13 | PRB 14 |

−1267.5 kHz −1087.5 kHz −907.5 kHz −727.5 kHz −547.5 kHz −367.5 kHz −187.5 kHz 0 kHz 187.5 kHz 367.5 kHz 547.5 kHz 727.5 kHz 907.5 kHz 1087.5 kHz 1267.5 kHz

| PRB 0 | PRB 1 | PRB 2 | PRB 3 | PRB 4 | PRB 5 | PRB 6 | | PRB 8 | PRB 9 | PRB 10 | PRB 11 | PRB 12 | PRB 13 | PRB 14 |

−1267.5 kHz −1087.5 kHz −907.5 kHz −727.5 kHz −547.5 kHz −367.5 kHz −187.5 kHz 0 kHz 187.5 kHz 367.5 kHz 547.5 kHz 727.5 kHz 907.5 kHz 1087.5 kHz 1267.5 kHz

FIG. 6a

FIG. 6b

700

Network device

Processor 701

Transmitter 702

⋮

Transmitter 702

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014161586 A1

**Non-patent literature cited in the description**

- **LG ELECTRONICS.** Discussion on NB-MIB contents for NB-IoT. *3GPP DRAFT; R1-161965 DISCUSSION ON NB-MIB CONTENTS FOR NB-IOT_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX,* 16 March 2016, vol. RAN WG1 (Sophia Antipolis, ht-tp://www.3gpp.org/ftp/tsg_ran/WG1_RL1/TSGR1_A H/LTE_NB-IoT_1603/Docs

- **SAMSUNG.** Remaining Details of NB-MIB Design. *3GPP DRAFT; R1-161925 NB-MIB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 16 March 2016, vol. RAN WG1 (Sophia Antipolis, ht-tp://www.3gpp.org/ftp/tsg_ran/WG1_RL1/TSGR1_A H/LTE_NB-IoT_1603/Docs relate to narrowband LTE